# EUROPEAN PATENT SPECIFICATION

(11) **EP 1 931 983 B1**
(45) Date of publication and mention of the grant of the patent: **16.09.2015**
(21) Application number: 06758040.7
(22) Date of filing: 07.07.2006
(51) Int. Cl.: G01N 27/72, G01L 1/12

(54) **METHOD FOR HANDLING A CAST IRON COMPONENT BASED ON ESTIMATING HARDNESS BY MAGNETIC BARKHAUSEN NOISE**
VERFAHREN ZUR HANDHABUNG EINER GUSSEISENKOMPONENTE AUF DER GRUNDLAGE DER HÄRTESCHÄTZUNG MITTELS MAGNETISCHEM BARKHAUSEN-RAUSCHEN
PROCEDE ASSOCIE A UN ELEMENT DE FONTE ET BASE SUR L'EVALUATION DE LA DURETE PAR BRUIT MAGNETIQUE DE BARKHAUSEN

(30) Priority: 05.09.2005 SE 0501978
(43) Date of publication of application: 18.06.2008
(73) Proprietor: Scania CV AB (publ), 151 87 Södertälje (SE)
(72) Inventor: LÖF, Pontus, S-252 27 Helsingborg (SE); THIBBLIN, Anders, S-169 66 Solna (SE)
(74) Representative: Scania CV AB
(86) International application number: PCT/SE2006/000855
(87) International publication number: WO 2007/030050

(56) References cited:
- EP-A1- 0 683 393
- EP-A1- 0 683 393
- DE-A1- 19 601 027
- US-A- 4 408 160
- US-A- 4 408 160
- US-A- 5 121 058
- US-A- 5 458 703
- US-A- 5 828 211
- W.A. THEINER ET AL.: "Determination of surface integrities by ferromagnetic quantities", SURFACE ENGINEERING CONFERENCE '85, vol. 1, 11, 1986, pages 151-161, XP9151664,
- G. DOBMANN ET AL.: "Quantitative Hardening-Depth-Mesurements up to 4 mm by Means of Micromagnetic Microstructure Multiparameter Analysis (3MA)", REVIEW OF PROGRESS IN QUANTITATIVE NONDESTRUCTIVE EVALUATION, vol. 7B, 1988, pages 1471-1475, XP9151665,
- DATABASE COMPENDEX [Online] ENGINEERING INFORMATION, INC., NEW YORK, NY, US; March 1988 (1988-03), FURUYA YASUBUMI ET AL: "MATERIAL EVALUATION OF SPHEROIDAL GRAPHITE CAST IRON BY MAGNETIC BARKHAUSEN NOISE ANALYSIS.", XP000002658036, Database accession no. EIX88090124059 & NIPPON KINZOKU GAKKAI-SI 1988 MAR, vol. 52, no. 3, March 1988 (1988-03), pages 267-271,
- DATABASE INSPEC [Online] THE INSTITUTION OF ELECTRICAL ENGINEERS, STEVENAGE, GB; March 1988 (1988-03), FURUYA Y ET AL: "Material evaluation of spheroidal graphite cast iron by magnetic Barkhausen noise analysis", XP000002658037, Database accession no. 3162624 & JOURNAL OF THE JAPAN INSTITUTE OF METALS JAPAN, vol. 52, no. 3, March 1988 (1988-03), pages 267-271, ISSN: 0021-4876

## Description

### Technical field

The present invention relates to a method for handling a component of cast iron adapted for use in a vehicle and/or engine.

### Background art

When producing vehicles, and/or engines for vehicles, such as automobiles or trucks, various parts are assembled into the finished vehicle. In order to ensure the function and quality of the finished vehicle it is sometimes desirable to test some of the parts, for example, concerning their dimensions, material qualities etc. before assembly. It is desirable that the tests performed on the parts are non-destructive, since otherwise the test may in itself destroy or deteriorate the parts. However, non-destructive tests are not always available.

One non-destructive test method for testing various characteristics of a material, such as hardness, is the magnetic Barkhausen noise method. The method comprises applying a varying magnetic field over a ferromagnetic material, such that the material becomes magnetized. During the magnetisation the magnetic domains in the material changes direction, so that the magnetic domains slowly become aligned with the applied magnetic field. The magnetic domains changes through movement of so-called Bloch-walls, such that favourably directed magnetic domains grows at the cost of less favourably directed domains. The Bloch-walls may become pinned by defects, for example when they run into a dislocation or a grain boundary, so that the growth of the domain stops abruptly. When the applied magnetic field increases further, the Bloch-wall overcomes the obstacle and moves quickly until it runs into the next defect. Thus the magnetization of the material takes place in small steps, which are known in the art as Barkhausen noise. Since both the hardness of a material and the Barkhausen noise are correlated with the number of defects in the material it is possible to estimate the hardness, and other material properties as well, based on the Barkhausen noise.

In document US 5,619,135 a measurement apparatus for non-destructive measurement of the hardness of steel using Barkhausen noise is shown. The apparatus is arranged to calculate a jump sum rate first moment from the Barkhausen signals and then to calculate a material property departing from the jump sum rate first moment.

In document WO 2004/021024 A1 an apparatus for determining the hardness penetration in steel is shown. The apparatus comprises a Barkhausen noise sensor applying a magnetic field with varying frequency between 1 and 200 Hz. Depending on the frequency of the applied magnetic field the magnetization reaches different depths in the material. The apparatus comprises means for comparing the Barkhausen noise signals acquired at different frequencies and for calculating the depth of hardness penetration departing from the different signals.

In document US 4,881,030 a method and an apparatus for measuring tensile stress in hardened regions are shown. The method is used on a turbine blade in order to resolve the internal stress of the blade.

SURFACE ENGINEERING CONFERENCE'85, vol. 1, 11, 1986, pages 151-161, XP009151664 describes the application of the Barkhausen noise method to pearlitic cast iron. Quantitative hardening depth measurements at steel and cast iron surfaces are discussed in REVIEW OF PROGRESS IN QUANTITATIVE NONDESTRUCTIVE EVALUATION, vol. 7B, 1988, pages 1471-1475, XP009151665. In JOURNAL OF THE JAPAN INSTITUTE OF METALS JAPAN, vol. 52, no. 3, March 1988, pages 267-271, ISSN 0021-4876 a Barkhausen noise parameter is used to estimate the brittleness of cast iron. The parameter can be combined with the Brinell hardness to obtain a correlation with the mechanical tensile strength of cast iron.

As apparent from the examples above the Barkhausen noise method is readily applicable to steels. Steels are easy to measure with the Barkhausen method, since steels have comparatively uniform grain sizes and low carbon content. However, it is much more difficult to obtain a good correlation when using the Barkhausen noise method to measure the properties of materials having large variations in grain size and/or a high content of carbon and/or alloying elements.

One material, which is difficult to measure with the Barkhausen method, is cast iron, due to a large variation in grain size and large contents of alloying materials and carbon. Parts and components made by cast iron and adapted for use in a vehicle have therefore hitherto not been tested concerning their hardness before assembly, since there have been no practical non-destructive methods available considered to give adequate results. In fact, it has been a long felt need of a method capable of non-destructive testing of the hardness of cast iron components intended for use in a vehicle or engine before assembly.

### Disclosure of the invention

One object of the present invention is to improve the handling of a component of cast iron adapted for use in a vehicle or engine. One other object of the invention is a device for handling a component of cast iron adapted for use in a vehicle or engine. One other object is a use of an improved method for handling a component of cast iron adapted for use in a vehicle or engine.

This object is achieved with the method defined in claim 1, the device defined in claim 9, and the use of a method defined in claim 10.

It has now been realized that even if it is difficult to achieve precise results from Barkhausen noise measurement on cast iron, the method has sufficient accuracy for determining whether the hardness of the measured component lies within an acceptable interval for the purpose of using the component in a vehicle or engine. It has now also been realized that the measurement of Barkhausen noise is at least partly affected by at which location on the component the measurement is made. By measuring the Barkhausen noise at a location giving an improved accuracy when estimating the hardness, the Barkhausen method may be sufficiently improved for use when handling a component intended for use in a vehicle. An improved measuring location on a component may readily be found by experimentation comprising comparison between the hardness as estimated from Barkhausen noise measured at a location and hardness measured with a destructive method.

Thus a component of cast iron having an estimated hardness outside the interval, and which is therefore likely to fail, may, for example, be reworked, be measured by another more reliable measuring method, or be rejected. Thus, the quality of the vehicle improves with a smaller probability of failure, and the cost for measuring the component decreases since the Barkhausen noise method is both non-destructive and quick and easy to use.

The Barkhausen noise method only takes a few seconds to perform and thus the method is very suitable for use in a production line in which each operation may only take a limited amount of time. The method therefore also comprise moving the sensor and/or component into contact for automatic estimation of the hardness. The method also comprises categorizing the component into an allowed group. The method also comprises assembling the allowed component into the vehicle or engine. By measuring the component either before accepting a delivery from a supplier, before carrying out further work on the component, or before assembling the component into the vehicle, it is ensured that the component has suitable hardness. A component which is too hard runs the risk of cracking, while a component which is too soft may not be able to withstand the forces acting on the component in use, and might fail due to wear, bending or fatigue.

The term component is here taken to comprise material blanks, semi- or fully-machined components, or a finished module. Magnetic Barkhausen noise parameters may, amongst others, comprise such parameters as the peak level of the Barkhausen noise signal, the position of the peak of the Barkhausen noise signal, the full-width half maximum of the Barkhausen noise signal, the root mean square of the signal, the integral of the signal, or the variation in the signal. In one embodiment the hardness is estimated based on the peak level, peak position, full-width half maximum and root mean square, but fewer or more parameters may also be used. The measuring unit of the estimated hardness may be defined by any hardness measuring method, such as Vickers hardness. In this document Brinell hardness units are used, and where real values are given as opposed to estimated hardness, they have been measured by using a ball with a diameter of 2,5 mm and a load force of 187,5 kg.

The method comprises measuring Barkhausen noise parameters on a machined section of the surface of the component. It has been discovered that different surface roughnesses have a profound effect on the result when measuring a component with the Barkhausen method. By measuring on machined surfaces the influence from different surface roughnesses for different components decreases, giving a better correlation, and lower statistical deviation between the estimated hardness from the Barkhausen noise signal and the real hardness of the component. The increase of the correlation and decrease of the standard deviation between the estimated and the real hardness of the component improves the probability to determine whether the component is suitable for use in the vehicle. It also allows a widening of the allowed hardness interval and thus decreases the probability of rejection of a component that actually can be used without problems.

Accordingly, the method comprises measuring Barkhausen noise parameters on a section of the surface of the component having an arithmetic surface roughness in an interval between 0 and 5 µm. In one embodiment the magnetic Barkhausen noise parameter is measured on a surface section having an arithmetic surface roughness in an interval between 0,5 and 3 µm and most preferably a surface roughness between 1 and 2 µm. Preferably the magnetic Barkhausen noise parameter is measured on a section of the surface of the component having an arithmetic surface roughness within an interval which is smaller than 3 µm, preferably smaller than 2 µm, most preferably smaller than 1 µm. Thus the measurements of the Barkhausen noise parameters and estimation of hardness of different components are less influenced by differences in surface roughness. Thus, the standard deviation decreases and the allowed estimated hardness interval for the component may be widened.

Accordingly, the method comprises measuring Barkhausen, noise parameters using an applied magnetic field varying with a frequency below 60 Hz, preferably below 25 Hz, more preferably below 2 Hz, and most preferably below 1 Hz. Thus, the Barkhausen noise is measured on deeper levels of the material, which averages the Barkhausen signal over a larger sample volume of the component, and further decreases standard deviation and increases the correlation between the real hardness of the component and the estimated hardness. It also decreases the influence from the surface. For a component to be used in a vehicle or engine the hardness inside the component may be as important as the hardness on the outside of the component.

Accordingly, the method comprises measuring Barkhausen parameters with a magnetic Barkhausen sensor and applying the sensor onto the surface with the use of a spring. In one embodiment the spring is pre-tensioned and is located inside the sensor probe. The transmission of magnetism is affected by the quality of the contact between the component and the sensor. By using a spring to apply the sensor towards the surface the probe may move in relation to the surface and into a position in which the contact between the sensor and the surface is of high quality, ensuring a better correlation and a smaller standard deviation.

The method also comprises applying the sensor towards the surface with a force deviating less than 20 % from a specified force. In one embodiment the force deviate less than 10 % from a specified force. When applying the sensor with a force onto the surface, a tension is created in the material. Since the Barkhausen noise is affected by the tension within the material, the standard deviation of the measurement decreases if the sensor is applied with a specified force. Furthermore the quality of the magnetic contact between the sensor and the component becomes more standardized, further decreasing the standard deviation.

Accordingly, the method comprises estimating residual tension within the material of the component of cast iron based on the Barkhausen noise parameters. The residual tension also influences the performance of the component by compressing forces aiding durability and tensile forces impairing durability. Thus, measuring and considering the residual tension increases the quality of the vehicle or engine. The method may also comprise determining whether the estimated residual tension lies within an allowed interval. The method may also comprise determining whether the estimated hardness and residual tension lies within an allowed combined space of hardness and residual tension, since the quality of the component is based on their combination.

The method further comprises measuring the Barkhausen noise parameters from at least two different sections of the surface, and estimating the hardness of the material in a component based on an average value of the at least one magnetic Barkhausen noise parameter for the at least two sections. The method may also comprise measuring the Barkhausen noise parameter and estimating the hardness based on an average value from at least three sections of the component. By using an average value the standard deviation of the measurement decreases, which gives a better probability to eliminate a low quality component. Furthermore, a larger number of components may be allowed, since the tolerance for the allowed calculated hardness interval can be increased.

Preferably, said component is a cylinder liner of cast iron. A cylinder liner covers the inside of the combustion chamber of an engine and is subjected to a hostile environment, especially in diesel engines. The cylinder liner is therefore changed periodically. The cylinders liner must withstand both wear and fatigue. The hardness of the cylinder liner is therefore very important for achieving a long lifetime. Furthermore, the surfaces of the cylinder liner are machined and thus constitute good surfaces for measurement of Barkhausen noise. The allowed estimated hardness interval may lie between 150 - 500 HBW, depending on the material of the cylinder liner.

Preferably, said component is made of grey cast iron. In one embodiment the component of grey cast iron is the engine block or a cylinder head. In another preferred embodiment said component comprises a cylinder liner of grey cast iron. Grey cast iron is particularly difficult to measure by use of magnetic Barkhausen noise since the grey cast iron comprises flakes of graphite interspaced inside the metal matrix. With the invention it is realized that the Barkhausen noise method still can be used by determining an allowed interval of hardness. For a cylinder liner of grey cast iron a preferred hardness interval lies between 180 - 300 HBW, more preferably between 240 - 290 HBW, and most preferably between 250 - 280 HBW.

The method further comprises measuring the Barkhausen parameters from at least two sections of the surface located at the same circumference of the cylinder liner. The cylinder liner is cylindrical in shape and is machined by turning the cylinder liner in a lathe around its length axes. By measuring on the same circumference less variation from different machining influences the result. In one embodiment the different cylinder liners are measured on the same location in relation to the length direction of the cylinder liners in order to decrease the influence from different machining.

According to the invention the hardness is estimated as a linear function of the Barkhausen parameters. The hardness is estimated as a linear combination of at least two, preferably four, magnetic Barkhausen parameters. Even though the relationship is not necessarily linear for the entire range of hardness, it is sufficient if the correlation is accurate around the allowed interval, since a component having an estimated hardness outside the allowed interval are rejected.

The relationship for estimating the hardness is dependent on the supplier from which the component was delivered. Since different suppliers may machine the same component in different ways, and may achieve different surface roughnesses, a better correlation and standard deviation is achieved if components from different suppliers are treated differently. In one embodiment the components from each supplier are also examined for the best location on the component for measuring the Barkhausen noise and estimating the hardness, since the best location may differ between different suppliers.

### Brief description of the drawings

The invention is now to be described as a non-limiting example of the invention and with reference to the attached drawings.
Fig. 1a shows a component and a magnetic Barkhausen noise measuring device.
Fig. 1b shows a detailed view of the Barkhausen noise sensor probe in fig. 1a.
Fig. 1c shows a magnification of a magnetization curve for the material in the component in fig. 1a.
Fig. 1d shows a plot of Barkhausen noise from the component in fig. 1a.
Fig. 1e shows a Barkhausen noise graph based on the noise in fig. 1d.
Figs. 2a-b show correlation plots between real hardness and estimated hardness for two examples of the invention.
Fig. 3 shows the method according to the invention in block diagram form.

### Mode(s) for carrying out the invention

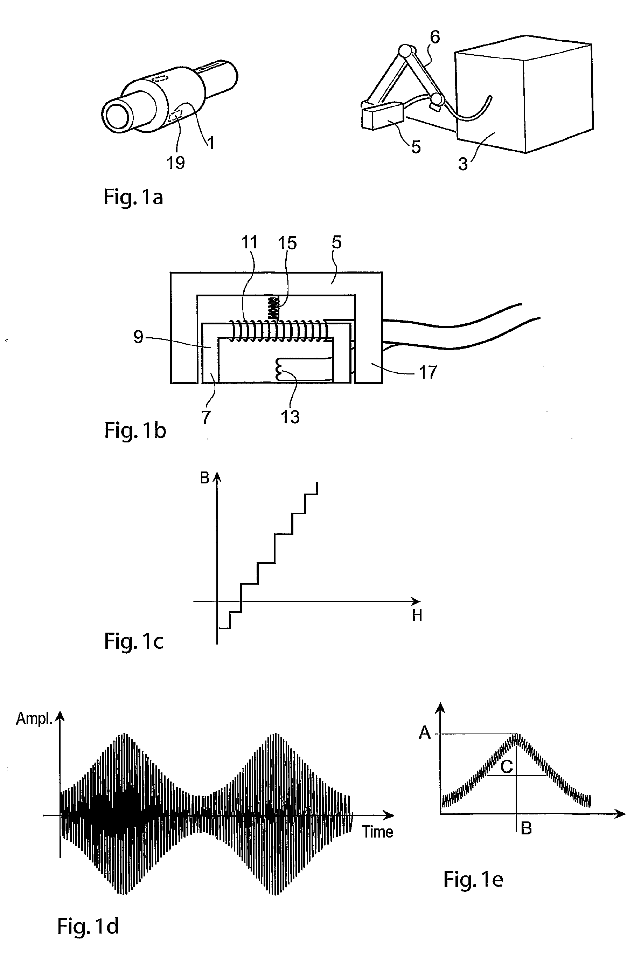

In Fig. 1a a component 1, in this example a cylinder liner, adapted for use in a vehicle or engine is shown. In this example the cylinder liner is made of grey cast iron, since grey cast iron is resistant to fatigue, with a heightened level of phosphorus in order to increase the hardness and strength of the material. It is imperative that the material of the cylinder liner is neither too hard, which would lead to cracking, nor too soft, which would lead to premature wear of the cylinder liner.

In Fig. 1b a device 3 for measuring magnetic Barkhausen noise is shown. The device comprises a sensor probe 5 adapted to be applied onto the surface of the cylinder liner, and to measure the Barkhausen noise in the material. The device 3 further comprises hardware and/or software adapted to carry out and control the measurement of the Barkhausen noise and to carry out necessary calculations as described below. The device 3 further comprises a robot arm 6, arranged to move the sensor probe 5 to the cylinder liner, wherein the device 3 is adapted for automatic measurement of the barkhausen noise. In another example the device 3 may instead be arranged to move the cylinder liner to the sensor probe 5 for automatic measurement.

In Fig. 1b an example of the sensor probe 5 is shown in more detail. The sensor probe 5 comprises an electromagnet 7 comprising a U-shaped body 9 in a ferro-magnetic material, and a coil 11 winded around the body 9 and adapted to generate a magnetic field. The body 9 is adapted to bear against, and conduct the magnetism to the surface of the cylinder liner. The sensor probe 5 further comprises a sensor 13 comprising a passive coil adapted to sense changes in the magnetic field. In operation the sensor probe 5 activates the electromagnet 7 to apply a varying magnetic field with a certain frequency and for a number of periods to the cylinder liner, which becomes magnetized. In this example the device 3 is adapted to apply at least four periods, or bursts, of the magnetic field. Fluctuation in the magnetic field caused by the magnetization of the cylinder liner produces a current in the coil 13, wherein the sensor 13 senses the magnetization process of the cylinder liner.

In Fig. 1c a graph representing a magnified view of the magnetization of the material in the cylinder liner is shown. As apparent the magnetization is stepwise since the Bloch-walls locally are pinned by defects in the material, such as grain boundaries and dislocations. The Barkhausen noise measuring device 3 is adapted to measure the irregularities, or noise, in the magnetization. I fig. 1d the noise from two periods of magnetization are shown. The noise is processed and presented in a noise graph, shown in fig. 1e, which is the average of the upper and lower noise in fig 1d. The Barkhausen noise graph gives a measure of the defects in the material, and thus the amount of noise may correlate with mechanical characteristics of the material such as hardness.

Accordingly, the magnetic Barkhausen noise measuring device 3 is adapted to measure Barkhausen noise parameters and to estimate the hardness of the material in the cylinder liner based on the Barkhausen noise parameters. The magnetic Barkhausen noise measuring device 3 is further adapted to determine whether the estimated hardness of the material of the cylinder liner lies within an allowed interval. The magnetic Barkhausen noise measurment device 3 is also adapted to emit a message telling if the estimated hardness lies within said allowed interval. If the hardness lies within the allowed interval it is assumed that the cylinder liner has sufficient quality to be used in the vehicle or engine without premature failure. In this example the allowed interval for the estimated hardness is between 250 - 280 HBW, assuming a standard deviation of about 8 HBW and an allowed real hardness between 240 and 290 HBW. Since it is sufficient that the estimated hardness lies within an allowed interval, it is possible to use the Barkhasuen noise method even though it is difficult to obtain precise estimations for gray cast iron.

The magnetic Barkhausen noise measuring device 3 is adapted to estimate the hardness based on a linear combination of four Barkhausen noise parameters. Three of these parameters are shown in fig. 1e, namely the peak of the noise graph A, the position of the noise graph B, and the full-width half maximum of the noise graph C. The fourth parameter is in this example the root-mean square of the noise graph. These parameters are well known in the art. In another example the magnetic Barkhausen noise measuring device may be adapted to estimate the hardness based on a fewer number of parameters, or on more parameters.

In this example the magnetic Barkhausen noise measuring device 3, and the electromagnet 7, are adapted to generate a magnetic field varying with a frequency below 50 Hz. In this example the frequency is below 2 Hz, but preferably the measurements are made below 1 Hz. Thus the magnetization penetrates deeper into the cylinder liner. The magnetic Barkhausen noise measuring device 3 is also adapted to generate at least four periods of the magnetic field, in order to acquire a better quality of the noise measurements. In fig. 1d only two such periods are shown.

The Barkhausen noise measuring device 3 is further adapted to measure said noise parameters on machined surface sections 19 on the cylinder liner. By measuring machined surface sections interference from the surface decreases, which improves the measurement. In this example the Barkhausen noise measuring device 3 is adapted to measure said noise parameters on a surface section 19 having an arithmetic surface roughness in an interval between 1 and 2 µm, which is within an interval with a variation in surface roughness smaller than 1 µm. Thus interference due to differences in surface roughness between different cylinder liners is limited.

The Barkhausen noise measuring device 3 is further adapted to measure said noise parameters on three different surface sections of the cylinder liner. Two of the surface sections, 19, are shown in fig. 1a, while the third surface section is located at the back of the cylinder liner and is therefore not visible. The Barkhausen noise measuring device 3 is adapted to estimate the hardness based on the average of the Barkhausen noise parameters as measured from the three surface sections 19. Thus any local irregularities in the cylinder liner will be averaged, increasing the correlation between the estimated hardness and the real hardness.

In this example the Barkhausen noise measuring device 3 is adapted to measure three surface sections 19 on the same circumference of the cylinder liner. During machining, the cylinder liner is turned around its length axes in a lathe, and thus the same circumference becomes machined in the same manner. Measuring surface section on the same circumference thus increases the efficiency. In fact it has been realized that different locations along the length of the cylinder liner gives different correlations and standard deviations when measured in relation to the real hardness. This depends on the different machining of the different surfaces. In this example the device 3 is adapted to measure a surface section giving the highest correlation and the lowest standard deviation. The best location, and the form of the correlation between the estimated hardness and the real hardness for a particular component may readily be found by simple experimentation. The best location and the form of the correlation may also differ between components from different suppliers.

The sensor probe 5 in fig. 1b is adapted to be applied towards the cylinder liner so that the length axis of the sensor probe is in parallel with the length axis of the cylinder liner. The sensor probe 5 further comprises walls 17 adapted to bear against the surface of the cylinder liner, and at least one spring 15 adapted to force the electromagnet 7 and the sensor coil 13 towards the surface of the cylinder liner. By this arrangement the electromagnet 7 and the sensor coil 13 contacts the surface at an appropriate angle, so that the magnetic contact between the probe 5 and the surface is well established. The electromagnet 7 and the sensor coil 13 will also be applied onto the surface with a specified contact force given by the compression of the spring 15. Thus, when several cylinder liners are measured, the sensor probe 5 will be applied towards the cylinder liners with almost the same force, meaning that any interference from applying the sensor probe on the cylinder liners with different forces will be decreased.

The Barkhausen noise measuring device 3 is further adapted to estimate the residual tension within the cylinder liner, as a linear combination of the magnetic Barkhausen noise parameters. The residual tension varies greatly between different locations of the cylinder liner. The Barkhausen noise measuring device 3 is therefore adapted to estimate an average value of the residual tension. The Barkhausen noise measuring device 3 is also adapted to determine whether the residual tension lies within an allowed interval. The Barkhausen noise measuring device 3 is also adapted to determine whether the cylinder liner is allowed depending on the estimated hardness and the estimated residual tension in combination. The residual tension may, either negatively or positively, influence the lifetime of the cylinder liner and hence a combination gives a better estimation of the expected performance of a particular cylinder liner.

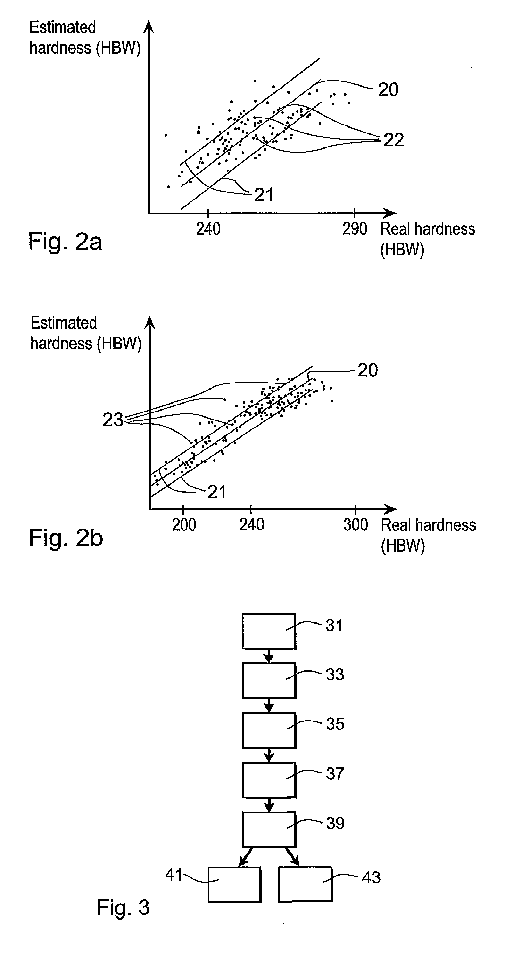

In Fig. 2a and 2b two examples of correlation plots between the real hardness versus estimated hardness are shown. The real hardness was measured with a Brinell hardness measuring device using a ball with a diameter of 2.5 mm and a load of 187.5 kg, and the estimated hardness was estimated with the device 3 in fig. 1a-b. The dots represent measurements made on different cylinder liners, and were measured using different methods of measuring. The graph 20 in the plots symbolizes the respective correlation between the estimated hardness and the real Brinell hardness. The graphs 21 symbolize the respective standard deviation of the different measurements.

The dots 22 in fig. 2a were measured on machined surfaces of cylinder liners having surface roughnesses in an interval between 0 and 5 µm, and by using a magnetizing field varying with a frequency of 50 Hz. The result from the measurements show that the correlation between the estimated hardness and the real hardness was 0.4. The standard deviation was 10.33 HBW.

The dots 23 in fig. 2b were measured on surfaces of cylinder liners having surface roughnesses in an interval between 1 and 2 µm, and by using a magnetizing field varying with a frequency below 2 Hz. The result from the measurements show that the correlation between the estimated hardness and the real hardness was 0.8. The standard deviation was 8.01.

The result clearly shows that the measurements made using a lower frequency and on surfaces having a more specified surface roughness give a better correlation and a lower standard deviation. The same is true concerning the measurement of residual tension.

In Fig. 3 a method according to the invention is shown in block diagram form. In block 31 the method comprises machining three surface sections that are to be measured, and which are arranged on the same circumference around the cylinder liner, and ensuring that the surface sections are machined to an acceptable surface roughness within an interval between 1 and 2 µm.

In block 33 the method comprises applying a Barkhausen sensor probe in turn to said surface sections by use of an automatic robot arm and with a contact force in an interval within 20 % from a specified force, and measuring Barkhausen noise from the three machined surface sections.

In block 35 the method comprises acquiring in this example four, magnetic Barkhausen noise parameters from the Barkhausen noise, and calculating the average values of the four Barkhausen parameters.

In block 37 the method comprises estimating the hardness of the material of the cylinder liner based on a linear combination of the four magnetic Barkhausen noise parameters. The method also comprises estimating the average residual tension in the cylinder liner based on another linear combination of the four magnetic Barkhausen noise parameters.

In block 39 the method comprises determining whether the estimated hardness and residual tension each lies within allowed intervals. In this example, since the component is a cylinder liner, the interval of allowed estimated hardness lies between 250 and 280 HBW.

If the estimated hardness and residual tension lies within the allowed intervals the method comprises accepting the cylinder liner in block 41. The method then also comprises using the cylinder liner for production of a vehicle or engine, and may, if need be, comprise further processing of the cylinder liner, and/or assembling the component into the vehicle or engine.

If the estimated hardness and residual tension lies outside the allowed intervals the method comprises rejecting the cylinder liner in block 43. If the hardness and/or residual tension lie near the allowed interval, the method comprises sending the cylinder liner for further testing, and/or reworking the cylinder liner. The rework may for example comprise annealing in order to decrease residual tension. If the hardness and/or residual tension lie far from the allowed interval the cylinder liner may be discarded.

The invention is not limited to the embodiments shown but may be varied within the framework of the following claims. For example, the component need not necessarily be a cylinder liner but may be any component made of cast iron. The invention is not limited to grey cast iron but may be equally applicable to for example white cast iron, nodular iron or any other type of cast iron. The surface to be measured may be polished in order to secure an adequate surface roughness.

## Claims

1. A method for handling a component (1) of cast iron adapted for use in a vehicle or engine, the method comprising:
- measuring magnetic Barkhausen noise parameters on at least one surface of the component,
- estimating the hardness of the material in the component based on a linear combination of the at least two magnetic Barkhausen noise parameters, and
- determining whether the estimated hardness lies within an allowed hardness interval, and
- allowing use of the component for producing a vehicle and/or an engine for a vehicle if the estimated hardness lies within the allowed hardness interval.

2. A method according to claim 1, **characterized in that** the method comprises measuring the magnetic Barkhausen noise parameters on a machined section of the surface of the component.

3. A method according to claim 1 or 2, **characterized in that** the method comprises measuring the magnetic Barkhausen noise parameters on a section of the surface of the component having an arithmetic surface roughness in an interval between 0 and 5 µm.

4. A method according to one of the claims 1-3, **characterized in that** the method comprises measuring the magnetic Barkhausen noise parameters using a magnetizing frequency below 60 Hz.

5. A method according to one of the claims 1-4, **characterized in that** the method comprises measuring the magnetic Barkhausen parameters with a magnetic Barkhausen sensor and applying the sensor onto the surface with the use of a spring.

6. A method according to any of the previous claims, **characterized in that** the method comprises estimating a residual tension within the material of the component based on the Barkhausen noise parameters.

7. A method according to any of the previous claims, **characterized in that** said component comprises a cylinder liner of grey cast iron.

8. A method according to claim 7, **characterized in that** the method comprises measuring the magnetic Barkhausen parameters from at least two sections of the surface located at the same circumference of the cylinder liner.

9. A device r (3) for handling a components (1) of cast iron adapted for use in a vehicle or engine, wherein the device comprises a magnetic Barkhausen noise sensor (5) adapted to measure magnetic Barkhausen noise parameters on at least one surface of the component, and the device is adapted to estimate the hardness of the material in the component based on a linear combination of at least two magnetic Barkhausen noise parameters, and to determine whether the estimated hardness lies within an allowed hardness interval.

## Patentansprüche

1. Verfahren zur Handhabung einer Gusseisenkomponente (1), die zur Verwendung in einem Fahrzeug oder Motor ausgebildet ist, wobei das Verfahren umfasst:
- Messen von magnetischen Barkhausen-Rauschen Parametern an wenigstens einer Komponentenoberfläche,
- Abschätzen der Härte des Komponentenmaterials, auf der Grundlage einer linearen Kombination von wenigstens zwei magnetischen Barkhausen-Rauschen Parametern und
- Bestimmen, ob die Härteschätzung in einem zulässigen Härtebereich liegt und
- Zulassen zur Verwendung der Komponente zum Herstellen eines Fahrzeuges und/oder eines Motors für ein Fahrzeug, falls die Härteschätzung in einem zulässigen Härtebereich liegt.

2. Verfahren nach Anspruch 1,
**dadurch gekennzeichnet, dass** das Verfahren das Messen der magnetischen Barkhausen-Rauschen Parameter in einem bearbeiteten Abschnitt auf der Komponentenoberfläche umfasst.

3. Verfahren nach Anspruch 1 oder 2,
**dadurch gekennzeichnet, dass** das Verfahren das Messen der magnetischen Barkhausen-Rauschen Parameter in einem Abschnitt auf der Komponentenoberfläche umfasst, die eine arithmetische Oberflächenrauigkeit in einem Bereich zwischen 0 und 5 µm aufweist.

4. Verfahren nach den Ansprüchen 1 bis 3,
**dadurch gekennzeichnet, dass** das Verfahren das Messen der magnetischen Barkhausen-Rauschen Parameter unter Verwendung einer Magnetisierungsfrequenz unterhalb 60 Hz umfasst.

5. Verfahren nach den Ansprüchen 1 bis 4,
**dadurch gekennzeichnet, dass** das Verfahren das Messen der magnetischen Barkhausen-Rauschen Parameter mit einem magnetischen Barkhausen Sensor umfasst, wobei dieser unter Verwendung einer Feder auf die Oberfläche aufgelegt wird.

6. Verfahren nach einem der vorhergehenden Ansprüche,
**dadurch gekennzeichnet, dass** das Verfahren das Abschätzen einer Restspannung in dem Komponentenmaterial umfasst, wobei diese auf den Barkhausen-Rauschen Parametern basiert.

7. Verfahren nach einem der vorhergehenden Ansprüche,
**dadurch gekennzeichnet, dass** die genannte Komponente ein Zylinderrohr aus Grauguss umfasst.

8. Verfahren nach Anspruch 7,
**dadurch gekennzeichnet, dass** das Verfahren das Messen der magnetischen Barkhausen-Rauschen Parameter in wenigstens zwei Abschnitten, die auf der Oberfläche des Zylinderrohrs mit gleichem Kreisumfang liegen, umfasst.

9. Vorrichtung (3) zur Handhabung einer Gusseisenkomponente (1), die zur Verwendung in einem Fahrzeug oder Motor ausgebildet ist, wobei die Vorrichtung einen magnetischen Barkhausen-Rauschen Sensor (5) umfasst, der dazu ausgebildet ist, die magnetischen Barkhausen-Rauschen Parameter an wenigstens einer Komponentenoberfläche zu messen, und wobei
die Vorrichtung zum Abschätzen der Härte eines Komponentenmaterials auf Grundlage der linearen Kombination von wenigstens zwei magnetischen Barkhausen-Rauschen Parametern und zum Bestimmen, ob die geschätzte Härte in einem zugelassenen Härtebereich liegt, ausgebildet ist.

## Revendications

1. Procédé pour manipuler un composant (1) en fonte adapté à être utilisé dans un véhicule ou un moteur, le procédé comprenant des étapes consistant à :
- mesurer des paramètres de bruit magnétique de Barkhausen sur au moins une surface du composant,
- estimer la dureté du matériau dans le composant en fonction d'une combinaison linéaire d'au moins deux des paramètres de bruit magnétique de Barkhausen, et
- déterminer si la dureté estimée se trouve à l'intérieur d'un intervalle de dureté admissible, et
- permettre l'utilisation du composant pour la production d'un véhicule et/ou d'un moteur pour un véhicule si la dureté estimée se trouve à l'intérieur de l'intervalle de dureté admissible.

2. Procédé selon la revendication 1, **caractérisé en ce que** le procédé comprend la mesure des paramètres de bruit magnétique de Barkhausen sur une section usinée de la surface du composant.

3. Procédé selon la revendication 1 ou 2, **caractérisé en ce que** le procédé comprend la mesure des paramètres de bruit magnétique de Barkhausen sur une section de la surface du composant ayant une rugosité de surface arithmétique comprise dans un intervalle s'étendant entre 0 et 5 µm.

4. Procédé selon l'une des revendications 1 à 3, **caractérisé en ce que** le procédé comprend la mesure des paramètres de bruit magnétique de Barkhausen à l'aide d'une fréquence de magnétisation inférieure à 60 Hz.

5. Procédé selon l'une des revendications 1 à 4, **caractérisé en ce que** le procédé comprend la mesure des paramètres magnétiques de Barkhausen avec un capteur magnétique de Barkhausen, et l'application du capteur sur la surface à l'aide d'un ressort.

6. Procédé selon l'une quelconque des revendications précédentes, **caractérisé en ce que** le procédé comprend l'estimation d'une tension résiduelle à l'intérieur du matériau du composant en fonction des paramètres de bruit de Barkhausen.

7. Procédé selon l'une quelconque des revendications précédentes, **caractérisé en ce que** ledit composant comprend une chemise de cylindre en fonte grise.

8. Procédé selon la revendication 7, **caractérisé en ce que** le procédé comprend la mesure des paramètres magnétiques de Barkhausen à partir d'au moins deux sections de la surface disposées au niveau de la même circonférence de la chemise de cylindre.

9. Dispositif (3) pour manipuler un composant (1) en fonte adapté à être utilisé dans un véhicule ou un moteur, dans lequel le dispositif comprend un capteur de bruit magnétique de Barkhausen (5) adapté à mesurer des paramètres de bruit magnétique de Barkhausen sur au moins une surface du composant, et le dispositif est adapté à estimer la dureté du matériau dans le composant en fonction d'une combinaison linéaire d'au moins deux paramètres de bruit magnétique de Barkhausen, et à déterminer si la dureté estimée se trouve à l'intérieur d'un intervalle de dureté admissible.
